# EUROPEAN PATENT APPLICATION

(11) **EP 4 685 867 A1**
(43) Date of publication of application: **28.01.2026**
(21) Application number: 23947375.4
(22) Date of filing: 29.11.2023
(51) Int. Cl.: H01M 4/36, H01M 4/131, H01M 10/0525

(54) **COMPOSITE POSITIVE ELECTRODE MATERIAL AND PREPARATION METHOD THEREFOR, POSITIVE ELECTRODE SHEET, SECONDARY BATTERY, AND ELECTRICAL APPARATUS**

(30) Priority: 31.07.2023 CN 202310952564
(71) Applicant: Contemporary Amperex Technology Co., Limited, Ningde, Fujian 352100 (CN)
(72) Inventor: WU, Kai, Ningde, Fujian 352100 (CN); WU, Zirui, Ningde, Fujian 352100 (CN); JIN, Chao, Ningde, Fujian 352100 (CN); YE, Yonghuang, Ningde, Fujian 352100 (CN); ZHENG, Shibing, Ningde, Fujian 352100 (CN)
(74) Representative: Jacob, Reuben Ellis
(86) International application number: PCT/CN2023/135110
(87) International publication number: WO 2025/025437

(57) **Abstract**

A composite positive electrode material and a preparation method therefor, a positive electrode sheet, a battery, and an electrical apparatus. The composite positive electrode material comprises a nickel-containing positive electrode material and a functional film layer arranged on the surface of the nickel-containing positive electrode material. Components of the functional film layer comprise Li₂MO₄ and an organic lithium phosphonate compound, where M is selected from at least one of sulfur, selenium, and tellurium; and the organic lithium phosphonate compound contains a structure represented by formula (1): (I), where * represents sites where the structure represented by formula (1) is connected to other structures in the organic lithium phosphonate compound.

## Description

### CROSS-REFERENCE

The present application refers to Chinese Patent Application No. 202310952564.4, entitled "COMPOSITE POSITIVE ELECTRODE MATERIAL AND PREPARATION METHOD THEREFOR, POSITIVE ELECTRODE PLATE, SECONDARY BATTERY, AND ELECTRIC DEVICE", filed on July 31, 2023, which is incorporated herein by reference in its entirety.

### TECHNICAL FIELD

The present application relates to the technical field of batteries, and in particular, to a composite positive electrode material and a preparation method therefor, a positive electrode plate, a secondary battery, and an electric device.

### BACKGROUND

Secondary batteries are becoming increasingly widely used due to their clean and renewable characteristics. The secondary batteries primarily generate electric energy through the movement of active ions, such as lithium ions, between positive electrodes and negative electrodes. These batteries have been widely applied in fields of electric vehicles, portable electronic devices, energy storage systems, and the like.

In recent years, with the rapid development of the new energy industry, the demands of people for new energy vehicles such as electric cars and electric bicycles have grown significantly, along with increasing performance requirements thereof.

With the increase of the demands, the performance of conventional secondary batteries is becoming increasingly difficult to meet the demands of people and requires further improvement.

### SUMMARY

According to various embodiments of the present application, the present application provides a composite positive electrode material and a preparation method therefor, a positive electrode plate, a battery, and an electric device, aiming to enhance the cycle performance and dynamics performance of a secondary battery.

A first aspect of the present application provides a composite positive electrode material, which includes a nickel-containing positive electrode material and a functional film layer disposed on a surface of the nickel-containing positive electrode material, where components of the functional film layer include Li₂MO₄ and a lithium organophosphonate compound,
where M is selected from at least one of sulfur, selenium, and tellurium; and the lithium organophosphonate compound has a structure shown in formula (1): 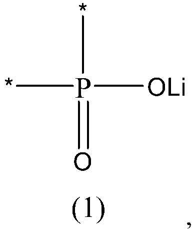 where * represents sites where the structure shown in formula (1) is connected to other structures in the lithium organophosphonate compound.

In the above composite positive electrode material, the functional film layer with specific components is formed on the surface of the positive electrode material. The components of the functional film layer include an inorganic component Li₂MO₄, and an organic component lithium organophosphonate compound. The specific organic and inorganic components synergistically enhance the strength and stability of the functional film layer, thereby reducing the probability of fracture of positive electrode material particles. Furthermore, in one aspect, Li₂MO₄ and the organic component lithium organophosphonate compound can serve as fast-ionic conductors, effectively enhancing the dynamics performance of the positive electrode material. In another aspect, the lithium organophosphonate compound exhibits good thermal stability performance and flame-retardant functions, which can enhance the thermal stability of the battery. Through the synergy of the above aspects, the composite positive electrode material can enhance the cycling stability and dynamics performance of the battery when used for battery preparation.

In some embodiments, in the functional film layer, a molar ratio of a MO₄²⁻ group in Li₂MO₄ to the structure shown in formula (1) of the lithium organophosphonate compound is (0.6 to 5):1.

Optionally, in the functional film layer, the molar ratio of the MO₄²⁻ group in Li₂MO₄ to the structure shown in formula (1) of the lithium organophosphonate compound is (1 to 5):1.

The ratio of components in the functional film layer is controlled to synergistically form a structurally stable organic-inorganic hybrid functional film layer, while reducing the negative impact on the cycle performance of the battery.

In some embodiments, a content of elemental M in the composite positive electrode material is ≤ 0.1%.

The content of residual elemental M in the functional film layer is controlled to reduce the negative impact thereof on the conductive performance of the positive electrode material.

In some embodiments, the functional film layer has a thickness of 5 nm to 20 nm.

Optionally, the functional film layer has a thickness of 5 nm to 10 nm.

The thickness of the functional film layer is controlled to further enhance the stability of the positive electrode material, while reducing the negative impact on the cycle performance thereof.

In some embodiments, the lithium organophosphonate compound contains a group shown in formula (1-1): 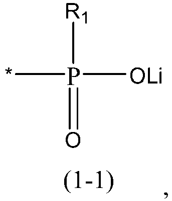 where R₁ is selected from any one of -OR₂, a substituted or unsubstituted alkyl with 1 to 10 carbon atoms, a substituted or unsubstituted alkenyl with 2 to 10 carbon atoms, and a substituted or unsubstituted alkynyl with 2 to 10 carbon atoms; and R₂ is selected from any one of H, Li, a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and a substituted or unsubstituted alkyl carboxylic acid with 2 to 10 carbon atoms.

In some embodiments, the lithium organophosphonate compound includes at least one of (a) to (c): 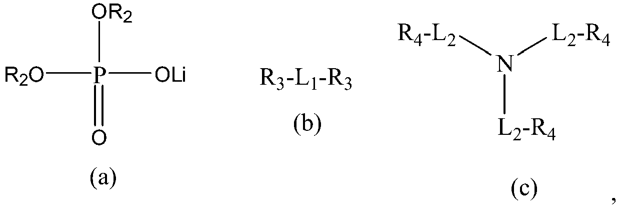
where in (a), each R₂ is not simultaneously selected from H;
each R₃ is independently selected from any one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, a phosphonic acid group, and the group shown in formula (1-1), and at least one R₃ is selected from the group shown in formula (1-1); and L₁ is selected from a substituted or unsubstituted alkylene with 1 to 10 carbon atoms and a substituted or unsubstituted alkenylene with 2 to 10 carbon atoms;
each L₂ is independently selected from any one of a single bond, a substituted or unsubstituted alkylene with 1 to 10 carbon atoms, and a substituted or unsubstituted alkenylene with 2 to 10 carbon atoms; and each R₄ is independently selected from at least one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and -L₂₁R₅; and
each L₂₁ is independently selected from a single bond and a substituted or unsubstituted alkylene with 1 to 10 carbon atoms; R₅ is selected from -N(R₆)₂, where each R₆ is independently selected from any one of H, a substituted or unsubstituted alkylene with 1 to 10 carbon atoms, a phosphonic acid group, and the group shown in formula (1-1); and (c) contains at least one group shown in formula (1-1).

In some embodiments, the lithium organophosphonate compound satisfies at least one of the following conditions (3) to (5):
(3) each R₂ is independently selected from any one of H, Li, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, an alkyl carboxylic acid with 2 to 10 carbon atoms, and a hydroxyl-substituted alkyl carboxylic acid with 2 to 10 carbon atoms;
(4) each R₃ is independently selected from any one of an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, a phosphonic acid group, and the group shown in formula (1-1); and
(5) each R₄ is independently selected from at least one of an alkyl with 1 to 10 carbon atoms, an alkenyl with 2 to 10 carbon atoms, an alkynyl with 2 to 10 carbon atoms, and -L₂₁R₅; and each R₆ is independently selected from any one of an alkylene with 1 to 10 carbon atoms, a phosphonic acid group, and the group shown in formula (1-1).

In some embodiments, the components of the functional film layer further include a metal oxide-type rock salt phase;
optionally, a metal in the metal oxide-type rock salt phase includes at least one of Ni, Co, and Mn.

The metal oxide-type rock salt phase can further protect the nickel-containing positive electrode material, reduce the probability of being attacked by organophosphorus compounds, and further enhance the cycling stability of the composite positive electrode material.

In some embodiments, components of the nickel-containing positive electrode material satisfy: LiₜNiₓCo_{y}AₕO_{z},
where A is selected from at least one of manganese, aluminum, copper, zinc, tin, magnesium, and iron, 0 < x < 1, 0 < y < 1, 1.5 ≤ y ≤ 2.5, 0 < h < 1, 0.8 ≤ t ≤ 1.5, and 1.5 ≤ z ≤ 2.5.

In some embodiments, a mass percentage of residual lithium in the composite positive electrode material is ≤ 2%, and the residual lithium includes Li₂CO₃, LiOH, and Li₂O.

A second aspect of the present application provides a preparation method for a composite positive electrode material, including the following steps:
subjecting a nickel-containing positive electrode material, elemental M, and an organophosphonate compound to a mixing treatment to prepare a prefabricated positive electrode material; and
subjecting the prefabricated positive electrode material to a formation treatment to prepare the composite positive electrode material, where
elemental M includes at least one of elemental sulfur, elemental selenium, and elemental tellurium; and the organophosphonate compound has a structure shown in formula (2): 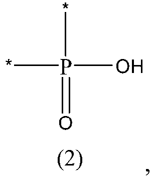 where * represents sites where the structure shown in formula (2) is connected to other structures in the organophosphonate compound.

During the preparation process of the above composite positive electrode material, elemental M reacts with the layered oxide in the nickel-containing positive electrode material to form Li₂M₂O₃, accompanied by the formation of the metal oxide-type rock salt phase to protect the surface of the positive electrode material particles. This allows the organophosphonate compound to preferentially react with the residual lithium such as LiOH and Li₂CO₃ on the surface of the positive electrode material to form a lithium organophosphonate compound, thereby initially forming a coating layer on the surface of the positive electrode material while absorbing the residual lithium on the surface of the nickel-containing positive electrode material. During the further formation process, Li₂M₂O₃ further reacts with the residual lithium and is oxidized to Li₂MO₄, ultimately forming a functional film layer including an inorganic component Li₂MO₄ and an organic component lithium organophosphonate compound. The specific organic and inorganic components synergistically enhance the strength and stability of the functional film layer, thereby reducing the probability of fracture of the positive electrode material particles. Furthermore, the in-situ generated organic-inorganic hybrid functional film layer on the surface of the particles enhances the dynamics performance, cycling stability, and thermal stability performance of the material.

Further, during the process of forming Li₂MO₄ through the reaction of elemental M, Li⁺ in the residual lithium is released, which can be used for compensating for the loss of Li ions caused by the formation of the functional film layer. Taking the lithium organophosphonate compound as hydroxyethane diphosphonic acid (HEDP) C₂H₈O₇P₂ and elemental M as sulfur as an example, the main reaction processes possibly involved during the above preparation process are illustrated as follows:

(1) 4LiM1O₂ + 2S→4M1O + Li₂S₂O₃ + Li₂O.

(2) 2Li₂O + C₂H₈O₇P₂→Li₄C₂H₄O₇P₂ + 2H₂O.

(3) 2Li₂CO₃ + C₂H₈O₇P₂→Li₄C₂H₄O₇P₂ + 2H₂O + 2CO₂.

In reaction (1), elemental M reacts with the layered oxide LiM1O₂ in the nickel-containing positive electrode material to form Li₂M₂O₃, accompanied by the formation of the metal oxide-type rock salt phase M1O, where M1 is a metal in the nickel-containing positive electrode material, and includes, but is not limited to: Ni, Co, or Mn. Meanwhile, the organophosphonate compound preferentially reacts with the residual lithium such as LiOH and Li₂CO₃ on the surface of the positive electrode material to form the lithium organophosphonate compound.

(4) 2LiMO₂ + S + 2Li₂O - 4e⁻→2MO + Li₂SO₄ + 4Li⁺.

(5) 2LiMO₂ + S + 2Li₂CO₃ - 4e⁻→2MO + Li₂SO₄ + 2CO₂ + 4Li⁺.

(6) Li₂S₂O₃ + 5Li₂O - 8e⁻→2Li₂SO₄ + 8Li⁺.

(7) Li₂S₂O₃ + Li₂CO₃ - 8e⁻→2Li₂SO₄ + 5CO₂ + 8Li⁺.

During the formation process, reactions (4) to (7) mainly occur. Li₂M₂O₃ further reacts with the residual lithium and is oxidized to Li₂MO₄, ultimately forming a functional film layer including an inorganic component Li₂MO₄ and an organic component lithium organophosphonate compound. In addition, the residual lithium is further absorbed to release Li⁺ in the residual lithium.

In some embodiments, the mixing treatment includes the following steps:
subjecting the nickel-containing positive electrode material and elemental M to a first mixing treatment, and then adding the organophosphonate compound for a second mixing treatment,
optionally, the first mixing treatment being performed for 0.5 h to 6 h; and
optionally, the second mixing treatment being performed for 0.5 h to 3 h.

Studies have shown that a redox reaction accompanied by oxygen release may occur when the organophosphonate compound comes into direct contact with the layered oxide in the nickel-containing positive electrode material, thereby damaging the structure of the positive electrode material. Taking hydroxyethane diphosphonic acid (HEDP) C₂H₈O₇P₂ as an example, the reaction is illustrated as follows:

4LiMO₂ + C₂H₈O₇P₂→Li₄C₂H₄O₇P₂ + 4MO + 2H₂O + O₂

Therefore, the nickel-containing positive electrode material and elemental M are subject to the first mixing treatment, such that a metal oxide-type rock salt phase MO is deposited on the surface of the nickel-containing positive electrode material, which is equivalent to a "protective barrier". This reduces the probability of a redox reaction accompanied by oxygen release that may occur when the organophosphonate compound comes into direct contact with the layered oxide in the nickel-containing positive electrode material.

In some embodiments, the mixing treatment satisfies at least one of the following conditions (6) to (7):
(6) a mass ratio of elemental M to the nickel-containing positive electrode material is (0.01 to 1):100,
optionally, the mass ratio of elemental M to the nickel-containing positive electrode material being (0.1 to 0.4):100; and
(7), a mass ratio of the organophosphonate compound to the nickel-containing positive electrode material is (0.01 to 1): 100,
optionally, the mass ratio of the organophosphonate compound to the nickel-containing positive electrode material being (0.1 to 0.5):100.

By controlling the mass ratio of elemental M, the organophosphonate compound, and the nickel-containing positive electrode material, residual lithium can be absorbed while a stable inorganic-organic hybrid functional film layer is formed, thereby further avoiding the negative impact on the cycle performance of the battery.

A third aspect of the present application provides a positive electrode plate, including the composite positive electrode material according to the first aspect or the composite positive electrode material obtained by the preparation method for a composite positive electrode material according to the second aspect.

A fourth aspect of the present application provides a secondary battery, which includes the composite positive electrode material according to the first aspect, or the composite positive electrode material obtained by the preparation method for a composite positive electrode material according to the second aspect, or the positive electrode plate according to the third aspect.

A fifth aspect of the present application provides an electric device, including the secondary battery according to the fourth aspect.

### BRIEF DESCRIPTION OF THE DRAWINGS

To more clearly illustrate the technical solutions in embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:
FIG. 1 is a schematic diagram of one embodiment of a battery cell;
FIG. 2 is an exploded diagram of FIG. 1;
FIG. 3 is a schematic diagram of one embodiment of a battery pack;
FIG. 4 is an exploded diagram of FIG. 3;
FIG. 5 is a schematic diagram of one embodiment of an electric device using a secondary battery as a power source; and
FIG. 6 is an electron microscope image of a composite positive electrode material according to one embodiment.

### Reference numerals:

1: battery pack; 2: upper case body; 3: lower case body; 4: battery cell; 41: housing; 42: electrode assembly; 43: cover plate; 5: electric device.

### DETAILED DESCRIPTION

To make the above objectives, features, and advantages of the present application more apparent and understandable, specific embodiments of the present application are described in detail below. In the following description, numerous specific details are set forth in order to provide a thorough understanding of the present application. However, the present application can be implemented in many other ways different from those described herein, and similar improvements can be made by those skilled in the art without departing from the spirit of the present application, such that the present application is not limited to the specific embodiments disclosed below.

In the present application, the terms "first" and "second" are used for description only and are not to be construed as indicating or implying relative importance or implicitly specifying the number of technical features indicated. Thus, a feature defined by "first" or "second" may explicitly or implicitly show that at least one such feature is included. In the description of the present application, "plurality" means at least two, e.g., two or three, unless otherwise explicitly and specifically defined.

Unless defined otherwise, all technical and scientific terms used herein have the same meaning as commonly understood by those skilled in the art to which the present application belongs. The terms used in the specification of the present application are only for the purpose of describing specific embodiments, and are not intended to limit the present application. The term "and/or" used herein includes any and all combinations of one or a plurality of related listed items.

In the present application, the term "alkyl" refers to a group formed by the loss of one hydrogen from an alkane, for example, a methyl is formed by the loss of one hydrogen from methane. The term "alkenyl or alkynyl" refers to a group formed by the loss of one hydrogen from an alkene or alkyne, for example, a vinyl is formed by the loss of one hydrogen from ethylene, and an ethynyl is formed by the loss of one hydrogen from acetylene.

The term "chain alkane" refers to an alkane in which all carbon atoms are connected by carbon-carbon single bonds and are not cyclic, and the remaining valence bonds are bonded to hydrogens, and includes linear alkanes and branched alkanes.

In the present application, the "chain alkyl with 1 to 10 carbon atoms" may have 1 to 30 carbon atoms, including 1, 2, 3, 4, 5, 6, 7, 8, 9, and 10. Non-limiting examples thereof include methyl, ethyl, n-propyl, isopropyl, n-butyl, isobutyl, 2-ethylbutyl, 3,3-dimethylbutyl, n-pentyl, isopentyl, neopentyl, 1-methylpentyl, 3-methylpentyl, 2-ethylpentyl, 4-methyl-2-pentyl, n-hexyl, 1-methylhexyl, 2-ethylhexyl, 2-butylhexyl, n-heptyl, 1-methylheptyl, 2,2-dimethylheptyl, 2-ethylheptyl, n-octyl, n-nonyl, and n-decyl.

In the present application, the term "substituted or unsubstituted" means that a functional group described later in the term may or may not have a substituent.

In the present application, the halogen group includes chlorine, fluorine, bromine, and iodine.

In the present application, when two groups are connected by a connecting point, for example, in 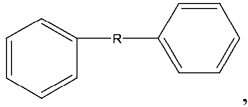 when R is selected from a single bond, it means that two groups are directly connected via a single bond without being connected by a specific group, i.e.,

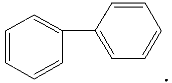

One embodiment of the present application provides a composite positive electrode material, which includes a nickel-containing positive electrode material and a functional film layer disposed on a surface of the nickel-containing positive electrode material, where components of the functional film layer include Li₂MO₄ and a lithium organophosphonate compound,
where M is selected from at least one of sulfur, selenium, and tellurium; and the lithium organophosphonate compound has a structure shown in formula (1): 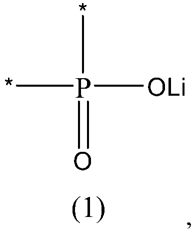 where * represents sites where the structure shown in formula (1) is connected to other structures in the lithium organophosphonate compound.

In the above composite positive electrode material, the functional film layer with specific components is formed on the surface of the positive electrode material. The components of the functional film layer include an inorganic component Li₂MO₄, and an organic component lithium organophosphonate compound. The specific organic and inorganic components synergistically enhance the strength and stability of the functional film layer, thereby reducing the probability of fracture of positive electrode material particles. Furthermore, in one aspect, Li₂MO₄ and the organic component lithium organophosphonate compound can serve as fast-ionic conductors, effectively enhancing the dynamics performance of the positive electrode material. In another aspect, the lithium organophosphonate compound exhibits good thermal stability performance and flame-retardant functions, which can enhance the thermal stability of the battery. Through the synergy of the above aspects, the composite positive electrode material can enhance the cycling stability and dynamics performance of the battery when used for battery preparation.

It can be understood that "*" represents sites where the group shown in formula (1) is connected to other structures in the lithium organophosphonate compound. In other words, at least one electron in the group shown in formula (1) may form a covalent bond with one electron in other structures in the lithium organophosphonate compound.

In the functional film layer, the molar ratio of a MO₄²⁻ group in Li₂MO₄ to the structure shown in formula (1) of the lithium organophosphonate compound is (0.6 to 5):1.

In some embodiments, in the functional film layer, the molar ratio of the MO₄²⁻ group in Li₂MO₄ to the structure shown in formula (1) of the lithium organophosphonate compound is (1 to 5):1.

In some embodiments, in the functional film layer, the molar ratio of the MO₄²⁻ group in Li₂MO₄ to the structure shown in formula (1) of the lithium organophosphonate compound is (1.5 to 5):1.

The ratio of components in the functional film layer is controlled to synergistically form a structurally stable organic-inorganic hybrid functional film layer, while reducing the negative impact on the cycle performance of the battery.

It can be understood that the molar ratio of the MO₄²⁻ group in Li₂MO₄ to the structure shown in formula (1) of the lithium organophosphonate compound directly reflects the molar ratio of Li₂MO₄ to the structure shown in formula (1) of the lithium organophosphonate compound.

Specifically, the functional film layer can be directly tested using an X-ray photoelectron spectroscopy (XPS) technique to obtain an energy spectrum, in which the characteristic peaks corresponding to the MO₄²⁻ group and the group of the structure shown in formula (1) are marked. The ratio of the intensities of the characteristic peaks of the two is the molar ratio of the MO₄²⁻ group to the group of the structure shown in formula (1).

The value of the above "(0.6 to 5):1" includes a minimum value and a maximum value of the range, and each value between the minimum value and the maximum value. Specific examples include, but are not limited to, point values in the embodiments and the following point values: 0.6:1, 0.7:1, 0.8:1, 0.9:1, 1:1, 1.2:1, 1.3:1, 1.4:1, 1.5:1, 1.6:1, 1.7:1, 1.8:1, 1.9:1, 2:1, 2.1:1, 2.2:1, 2.3:1, 2.4, 2.5:1, 2.6:1, 2.7:1, 2.8:1, 2.9:1, 3:1, 3.1:1, 3.2:1, 3.3:1, 3.4, 3.5:1, 3.6:1. 3.7:1, 3.8:1, 3.9:1, 4:1, and 5:1, or ranges consisting of any two of the above numerical values, such as (1.5 to 4):1, (1.5 to 3.5):1, (1.5 to 3):1, (1.5 to 2.5):1, (1.5 to 2):1, (2 to 4):1, (2 to 3.5):1, (2 to 3):1, (2 to 2.5):1, (2.5 to 4):1, (2.5 to 3.5):1, and (2.5 to 3):1.

In some embodiments, the molar ratio of the MO₄²⁻ group in Li₂MO₄ to the structure shown in formula (1) of the lithium organophosphonate compound is 2:1.

In some embodiments, the content of elemental M in the composite positive electrode material is ≤ 0.1%.

The content of residual elemental M in the functional film layer is controlled to reduce the negative impact thereof on the conductive performance of the positive electrode material.

In some embodiments, the functional film layer has a thickness of 5 nm to 20 nm.

Optionally, the functional film layer has a thickness of 5 nm to 10 nm.

The thickness of the functional film layer is controlled to further enhance the stability of the positive electrode material, while reducing the negative impact on the cycle performance thereof.

The value of the above "5 nm to 20 nm" includes a minimum value and a maximum value of the range, and each value between the minimum value and the maximum value. Specific examples include, but are not limited to, point values in the embodiments and the following point values: 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, and 20 nm, or ranges consisting of any two of the above numerical values, such as 5 nm to 20 nm, 5 nm to 15 nm, 5 nm to 10 nm, 7 nm to 20 nm, 7 nm to 20 nm, 7 nm to 15 nm, 7 nm to 10 nm, 10 nm to 20 nm, 10 nm to 15 nm, and 15 nm to 20 nm.

In some embodiments, the lithium organophosphonate compound contains a group shown in formula (1-1): 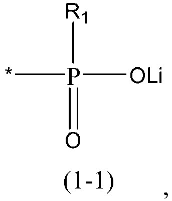 where R₁ is selected from any one of -OR₂, a substituted or unsubstituted alkyl with 1 to 10 carbon atoms, a substituted or unsubstituted alkenyl with 2 to 10 carbon atoms, and a substituted or unsubstituted alkynyl with 2 to 10 carbon atoms; and R₂ is selected from any one of H, Li, a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and a substituted or unsubstituted alkyl carboxylic acid with 2 to 10 carbon atoms.

In some embodiments, R₁ is selected from any one of -OR₂, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, and an alkynyl with 2 to 10 carbon atoms.

In some embodiments, R₁ is selected from any one of -OR₂, a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, and an alkynyl with 2 to 10 carbon atoms.

In some embodiments, R₁ is selected from any one of -OR₂, an alkyl with 1 to 5 carbon atoms, a halogen-substituted alkyl with 1 to 5 carbon atoms, a hydroxyl-substituted alkyl with 1 to 5 carbon atoms, an alkenyl with 2 to 5 carbon atoms, and an alkynyl with 2 to 5 carbon atoms.

In some embodiments, R₁ is selected from any one of -OR₂, a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, and an alkynyl with 2 to 5 carbon atoms.

In some embodiments, R₁ is selected from any one of -OR₂, a chain alkyl with 1 to 3 carbon atoms, a halogen-substituted chain alkyl with 1 to 3 carbon atoms, a hydroxyl-substituted chain alkyl with 1 to 3 carbon atoms, a chain alkenyl with 2 to 5 carbon atoms, and an alkynyl with 2 to 5 carbon atoms.

In some embodiments, R₂ is selected from any one of H, Li, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, and an alkyl carboxylic acid with 2 to 10 carbon atoms.

It can be understood that "alkyl carboxylic acid" refers to a group formed by substituting at least one hydrogen in an alkyl with a carboxylic acid group.

In some embodiments, R₂ is selected from any one of H, Li, a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, an alkynyl with 2 to 10 carbon atoms, and a chain alkyl carboxylic acid with 2 to 10 carbon atoms.

In some embodiments, R₂ is selected from any one of H, Li, an alkyl with 1 to 5 carbon atoms, a halogen-substituted alkyl with 1 to 5 carbon atoms, a hydroxyl-substituted alkyl with 1 to 5 carbon atoms, an alkenyl with 2 to 5 carbon atoms, an alkynyl with 2 to 5 carbon atoms, and an alkyl carboxylic acid with 2 to 5 carbon atoms.

In some embodiments, R₂ is selected from any one of H, Li, a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, an alkynyl with 2 to 5 carbon atoms, and a chain alkyl carboxylic acid with 2 to 5 carbon atoms.

In some embodiments, R₂ is selected from any one of H, Li, a chain alkyl with 1 to 3 carbon atoms, a halogen-substituted chain alkyl with 1 to 3 carbon atoms, a hydroxyl-substituted chain alkyl with 1 to 3 carbon atoms, a chain alkenyl with 2 to 5 carbon atoms, an alkynyl with 2 to 5 carbon atoms, and a chain alkyl carboxylic acid with 2 to 5 carbon atoms.

In some embodiments, the lithium organophosphonate compound includes at least one of (a) to (c):

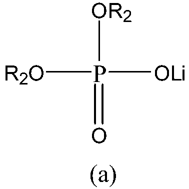

R₃-L₁-R₃ (b)

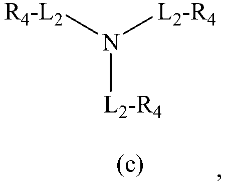

where in (a), each R₂ is not simultaneously selected from H.

In some embodiments, each R₃ is independently selected from any one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, a phosphonic acid group, and the group shown in formula (1-1), and at least one R₃ is selected from the group shown in formula (1-1); and L₁ is selected from a substituted or unsubstituted alkylene with 1 to 10 carbon atoms and a substituted or unsubstituted alkenylene with 2 to 10 carbon atoms.

In some embodiments, each R₃ is independently selected from any one of an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, a phosphonic acid group, and the group shown in formula (1-1), and at least one R₃ is selected from the group shown in formula (1-1).

In some embodiments, each R₃ is independently selected from any one of a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, an alkynyl with 2 to 10 carbon atoms, a phosphonic acid group, and the group shown in formula (1-1), and at least one R₃ is selected from the group shown in formula (1-1).

In some embodiments, each R₃ is independently selected from any one of a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, an alkynyl with 2 to 10 carbon atoms, a phosphonic acid group, and the group shown in formula (1-1), and at least one R₃ is selected from the group shown in formula (1-1).

In some embodiments, each L₂ is independently selected from any one of a single bond, an alkylene with 1 to 10 carbon atoms, a hydroxyl-substituted alkylene with 1 to 10 carbon atoms, a halogen-substituted alkylene with 1 to 10 carbon atoms, and an alkenylene with 2 to 10 carbon atoms.

In some embodiments, each L₂ is independently selected from any one of a single bond, a chain alkylene with 1 to 10 carbon atoms, a hydroxyl-substituted chain alkylene with 1 to 10 carbon atoms, a halogen-substituted chain alkylene with 1 to 10 carbon atoms, and an alkenylene with 2 to 10 carbon atoms.

In some embodiments, each L₂ is independently selected from any one of a single bond, an alkylene with 1 to 5 carbon atoms, a hydroxyl-substituted alkylene with 1 to 5 carbon atoms, a halogen-substituted alkylene with 1 to 5 carbon atoms, and an alkenylene with 2 to 5 carbon atoms.

In some embodiments, each L₂ is independently selected from any one of a single bond, a chain alkylene with 1 to 5 carbon atoms, a hydroxyl-substituted chain alkylene with 1 to 5 carbon atoms, a halogen-substituted chain alkylene with 1 to 5 carbon atoms, and a chain alkenylene with 2 to 5 carbon atoms.

In some embodiments, each R₄ is independently selected from at least one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and -L₂₁R₅.

Each L₂₁ is independently selected from a single bond and a substituted or unsubstituted alkylene with 1 to 10 carbon atoms; R₅ is selected from -N(R₆)₂, where each R₆ is independently selected from any one of H, a substituted or unsubstituted alkylene with 1 to 10 carbon atoms, a phosphonic acid group, and the structure shown in formula (1-1); (c) contains at least one group shown in formula (1-1).

It can be understood that the presence of at least one group shown in formula (1-1) in (c) means that at least one R₄ in formula (c) is selected from -L₂₁R₅, at least one L₂₁ is -N(R₆)₂, and at least one R₆ is the group shown in formula (1-1).

In some embodiments, each L₂₁ is independently selected from any one of a single bond, an alkylene with 1 to 10 carbon atoms, a halogen-substituted alkylene with 1 to 10 carbon atoms, and a hydroxyl-substituted alkylene with 1 to 10 carbon atoms.

In some embodiments, each L₂₁ is independently selected from any one of a single bond, a chain alkylene with 1 to 10 carbon atoms, a halogen-substituted chain alkylene with 1 to 10 carbon atoms, and a hydroxyl-substituted chain alkylene with 1 to 10 carbon atoms.

In some embodiments, each L₂₁ is independently selected from any one of a single bond, an alkylene with 1 to 5 carbon atoms, a halogen-substituted alkylene with 1 to 5 carbon atoms, and a hydroxyl-substituted alkylene with 1 to 5 carbon atoms.

In some embodiments, each L₂₁ is independently selected from any one of a single bond, a chain alkylene with 1 to 5 carbon atoms, a halogen-substituted chain alkylene with 1 to 5 carbon atoms, and a hydroxyl-substituted chain alkylene with 1 to 5 carbon atoms.

In some embodiments, each L₂₁ is independently selected from any one of a single bond, an alkylene with 1 to 3 carbon atoms, a halogen-substituted alkylene with 1 to 3 carbon atoms, and a hydroxyl-substituted alkylene with 1 to 3 carbon atoms.

In some embodiments, each R₆ is independently selected from any one of H, an alkylene with 1 to 10 carbon atoms, a halogen-substituted alkylene with 1 to 10 carbon atoms, a hydroxyl-substituted alkylene with 1 to 10 carbon atoms, a phosphonic acid group, and the structure shown in formula (1-1).

In some embodiments, each R₆ is independently selected from any one of H, a chain alkylene with 1 to 10 carbon atoms, a halogen-substituted chain alkylene with 1 to 10 carbon atoms, a hydroxyl-substituted chain alkylene with 1 to 10 carbon atoms, a phosphonic acid group, and the structure shown in formula (1-1).

In some embodiments, each R₆ is independently selected from any one of H, an alkylene with 1 to 5 carbon atoms, a halogen-substituted alkylene with 1 to 5 carbon atoms, a hydroxyl-substituted alkylene with 1 to 5 carbon atoms, a phosphonic acid group, and the structure shown in formula (1-1).

In some embodiments, each R₆ is independently selected from any one of H, a chain alkylene with 1 to 5 carbon atoms, a halogen-substituted chain alkylene with 1 to 5 carbon atoms, a hydroxyl-substituted chain alkylene with 1 to 5 carbon atoms, a phosphonic acid group, and the structure shown in formula (1-1).

In some embodiments, the components of the functional film layer further include a metal oxide-type rock salt phase.

Optionally, a metal in the metal oxide-type rock salt phase includes at least one of Ni, Co, and Mn.

The metal oxide-type rock salt phase can further protect the nickel-containing positive electrode material, reduce the probability of being attacked by organophosphorus compounds, and further enhance the cycling stability of the composite positive electrode material.

It can be understood that the above nickel positive electrode material may be various types of nickel positive electrode materials commonly used in the art, such as at least one of lithium nickel manganese oxide, lithium nickel cobalt manganese oxide (e.g., LiNi_{1/3}Co_{1/3}Mn_{1/3}O₂, also abbreviated as NCM333; LiNi_{0.5}Co_{0.2}Mn_{0.3}O₂, also abbreviated as NCM523; LiNi_{0.5}Co_{0.25}Mn_{0.25}O₂, also abbreviated as NCM211; LiNi_{0.6}Co_{0.2}Mn_{0.2}O₂, also abbreviated as NCM622; and LiNi_{0.8}Co_{0.1}Mn_{0.1}O₂, also abbreviated as NCM811), lithium nickel cobalt aluminum oxide (e.g., LiNi_{0.8}Co_{0.15}Al_{0.05}O₂), and modified compounds thereof.

It is to be noted that the lithium content in the positive electrode material exemplified above refers to the content in an unused condition. During use, the battery may undergo repeated charging and discharging, during which Li in the positive electrode active material may change. That is, the molar subscript of Li in the positive electrode active material of the battery product does not remain constant at 1, but may vary.

In some embodiments, the components of the nickel-containing positive electrode material satisfy: LiₜNiₓCo_{y}AₕO_{z},

where A is selected from at least one of manganese, aluminum, copper, zinc, tin, magnesium, and iron, 0 < x < 1, 0 < y < 1, 1.5 ≤ y ≤ 2.5, 0 < h < 1, 0.8 ≤ t ≤ 1.5, and 1.5 ≤ z ≤ 2.5.

In some embodiments, the mass percentage of residual lithium in the composite positive electrode material is ≤ 2%, and the residual lithium includes Li₂CO₃, LiOH, and Li₂O.

Another embodiment of the present application provides a preparation method for a composite positive electrode material, including the following steps S10 to S20.

In S10, a nickel-containing positive electrode material, elemental M, and an organophosphonate compound are subject to a mixing treatment to prepare a prefabricated positive electrode material.

In S20, the prefabricated positive electrode material is subject to a formation treatment to prepare the composite positive electrode material.

Elemental M includes at least one of elemental sulfur, elemental selenium, and elemental tellurium; and the organophosphonate compound has a structure shown in formula (2): 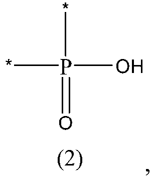 where * represents sites where the structure shown in formula (2) is connected to other structures in the organophosphonate compound.

During the preparation process of the above composite positive electrode material, elemental M reacts with the layered oxide in the nickel-containing positive electrode material to form Li₂M₂O₃, accompanied by the formation of the metal oxide-type rock salt phase to protect the surface of the positive electrode material particles. This allows the organophosphonate compound to preferentially react with the residual lithium such as LiOH and Li₂CO₃ on the surface of the positive electrode material to form a lithium organophosphonate compound, thereby initially forming a coating layer on the surface of the positive electrode material while absorbing the residual lithium on the surface of the nickel-containing positive electrode material. During the further formation process, Li₂M₂O₃ further reacts with the residual lithium and is oxidized to Li₂MO₄, ultimately forming a functional film layer including an inorganic component Li₂MO₄ and an organic component lithium organophosphonate compound. The specific organic and inorganic components synergistically enhance the strength and stability of the functional film layer, thereby reducing the probability of fracture of the positive electrode material particles. Furthermore, the in-situ generated organic-inorganic hybrid functional film layer on the surface of the particles enhances the dynamics performance, cycling stability, and thermal stability performance of the material.

It can be understood that the organophosphonate compound with the structure shown in formula (2) reacts with the residual lithium such as LiOH and Li₂CO₃ on the surface of the positive electrode material to form the lithium organophosphonate compound with the structure shown in formula (1).

Further, during the process of forming Li₂MO₄ through the reaction of elemental M, Li⁺ in the residual lithium is released, which can be used for compensating for the loss of Li ions caused by the formation of the functional film layer. Taking the lithium organophosphonate compound as hydroxyethane diphosphonic acid (HEDP) C₂H₈O₇P₂ and elemental M as sulfur as an example, the main reaction processes possibly involved during the above preparation process are illustrated as follows:

(1) 4LiM1O₂ + 2S→4M1O + Li₂S₂O₃ + Li₂O.

(2) 2Li₂O + C₂H₈O₇P₂→Li₄C₂H₄O₇P₂ + 2H₂.

(3) 2Li₂CO₃ + C₂H₈O₇P₂→Li₄C₂H₄O₇P₂ + 2H₂O + 2CO₂.

In reaction (1), elemental M reacts with the layered oxide LiM1O₂ in the nickel-containing positive electrode material to form Li₂M₂O₃, accompanied by the formation of the metal oxide-type rock salt phase M1O, where M1 is a metal in the nickel-containing positive electrode material, and includes, but is not limited to: Ni, Co, or Mn. Meanwhile, the organophosphonate compound preferentially reacts with the residual lithium such as LiOH and Li₂CO₃ on the surface of the positive electrode material to form the lithium organophosphonate compound.

(4) 2LiMO₂ + S + 2Li₂O - 4e⁻→2MO + Li₂SO₄ + 4Li⁺.

(5) 2LiMO₂ + S + 2Li₂CO₃ - 4e⁻→2MO + Li₂SO₄ + 2CO₂ + 4Li⁺.

(6) Li₂S₂O₃ + 5Li₂O - 8e⁻→2Li₂SO₄ + 8Li⁺.

(7) Li₂S₂O₃ + Li₂CO₃ - 8e⁻→2Li₂SO₄ + 5CO₂ + 8Li⁺.

During the formation process, reactions (4) to (7) mainly occur. Li₂M₂O₃ further reacts with the residual lithium and is oxidized to Li₂MO₄, ultimately forming a functional film layer including an inorganic component Li₂MO₄ and an organic component lithium organophosphonate compound. In addition, the residual lithium is further absorbed to release Li⁺ in the residual lithium.

It can be understood that when the above composite positive electrode material or the above preparation method for a composite positive electrode material is used to prepare a secondary battery, the formation step in the above step S20 may be directly performed in the battery.

In some embodiments, the mixing treatment in step S10 includes the following step S11.

In step S11, the nickel-containing positive electrode material and elemental M are subject to a first mixing treatment, and then the organophosphonate compound is added for a second mixing treatment.

The researchers have found that a redox reaction accompanied by oxygen release may occur when the organophosphonate compound comes into direct contact with the layered oxide in the nickel-containing positive electrode material, thereby damaging the structure of the positive electrode material. Taking hydroxyethane diphosphonic acid (HEDP) C₂H₈O₇P₂ as an example, the reaction is illustrated as follows:

4LiMO₂ + C₂H₈O₇P₂→Li₄C₂H₄O₇P₂ + 4MO + 2H₂O + O₂

Therefore, the nickel-containing positive electrode material and elemental M are subject to the first mixing treatment, such that a metal oxide-type rock salt phase MO is deposited on the surface of the nickel-containing positive electrode material, which is equivalent to a "protective barrier". This reduces the probability of a redox reaction accompanied by oxygen release that may occur when the organophosphonate compound comes into direct contact with the layered oxide in the nickel-containing positive electrode material.

Optionally, the first mixing treatment is performed for 0.5 h to 6 h.

Optionally, the second mixing treatment is performed for 0.5 h to 3 h.

The value of the above "0.5 h to 6 h" includes a minimum value and a maximum value of the range, and each value between the minimum value and the maximum value. Specific examples include, but are not limited to, point values in the embodiments and the following point values: 0.5 h, 1 h, 1.5 h, 2 h, 2.5 h, 3 h, 3.5 h, 4 h, 4.5 h, 5 h, 5.5 h, and 6 h, or ranges consisting of any two of the above numerical values.

The value of the above "0.5 h to 3 h" includes a minimum value and a maximum value of the range, and each value between the minimum value and the maximum value. Specific examples include, but are not limited to, point values in the embodiments and the following point values: 0.5 h, 1 h, 1.5 h, 2 h, 2.5 h, and 3 h, or ranges consisting of any two of the above numerical values.

In some embodiments, the first mixing treatment and the second mixing treatment are both performed under stirring conditions. Further, the stirring speed is maintained at 400 r/s to 1000 r/s.

In some embodiments, the mass ratio of elemental M to the nickel-containing positive electrode material is (0.01 to 1):100.

Optionally, the mass ratio of elemental M to the nickel-containing positive electrode material is (0.1 to 0.4):100.

In some embodiments, the mass ratio of the organophosphonate compound to the nickel-containing positive electrode material is (0.01 to 1):100.

Optionally, the mass ratio of the organophosphonate compound to the nickel-containing positive electrode material is (0.1 to 0.5):100.

By controlling the mass ratio of elemental M, the organophosphonate compound, and the nickel-containing positive electrode material, residual lithium can be absorbed while a stable inorganic-organic hybrid functional film layer is formed, thereby further avoiding the negative impact on the cycle performance of the battery.

The value of the above "(0.01 to 1):100" includes a minimum value and a maximum value of the range, and each value between the minimum value and the maximum value. Specific examples include, but are not limited to, point values in the embodiments and the following point values: 0.01:100, 0.05:100, 0.1:100, 0.15:100, 0.2:100, 0.25:100, 0.3:100, 0.35:100, 0.4:100, 0.45:100, 0.5:100, 0.55:100, 0.6:100, 0.65:100, 0.7:100, 0.75:100, 0.8:100, 0.85:100, 0.9:100, 0.95:100, and 1:100, or ranges consisting of any two of the above numerical values.

The value of the above "(0.01 to 1):100" includes a minimum value and a maximum value of the range, and each value between the minimum value and the maximum value. Specific examples include, but are not limited to, point values in the embodiments and the following point values: 0.01:100, 0.05:100, 0.1:100, 0.15:100, 0.2:100, 0.25:100, 0.3:100, 0.35:100, 0.4:100, 0.45:100, 0.5:100, 0.55:100, 0.6:100, 0.65:100, 0.7:100, 0.75:100, 0.8:100, 0.85:100, 0.9:100, 0.95:100, and 1:100, or ranges consisting of any two of the above numerical values.

In some embodiments, after the mixing step and before the formation step, a drying step is further performed on the mixing step.

Further, the drying is performed at 80 °C to 110 °C for 0.01 h to 5 h.

In some embodiments, the above mixing treatment step is performed in a solvent. Further, the solvent includes N-methylpyrrolidone and a small molecular alcohol with 2 to 5 carbon atoms.

Further, the small molecular alcohol with 2 to 5 carbon atoms includes ethanol.

In some embodiments, elemental M is added in the form of a solution. Specifically, elemental M and N-methylpyrrolidone are mixed to form a solution. Further, the concentration of elemental M is 0.5 mol/L to 2 mol/L.

In some embodiments, the organophosphonate compound is added in the form of a solution. Specifically, the organophosphonate compound and the small molecular alcohol with 2 to 5 carbon atoms are mixed to form a solution. Further, the concentration of the organophosphonate compound is 0.5 mol/L to 2 mol/L.

In some embodiments, the organophosphonate compound contains a group shown in formula (1-2): 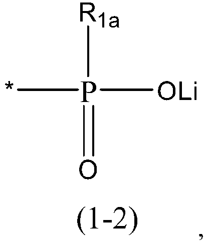 where R₁ₐ is selected from any one of -OR₂ₐ, a substituted or unsubstituted alkyl with 1 to 10 carbon atoms, a substituted or unsubstituted alkenyl with 2 to 10 carbon atoms, and a substituted or unsubstituted alkynyl with 2 to 10 carbon atoms; and R₂ₐ is selected from any one of H, Li, a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and a substituted or unsubstituted alkyl carboxylic acid with 2 to 10 carbon atoms.

In some embodiments, R₁ₐ is selected from any one of -OR₂ₐ, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, and an alkynyl with 2 to 10 carbon atoms.

In some embodiments, R₁ₐ is selected from any one of -OR₂ₐ, a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, and an alkynyl with 2 to 10 carbon atoms.

In some embodiments, R₁ₐ is selected from any one of -OR₂ₐ, an alkyl with 1 to 5 carbon atoms, a halogen-substituted alkyl with 1 to 5 carbon atoms, a hydroxyl-substituted alkyl with 1 to 5 carbon atoms, an alkenyl with 2 to 5 carbon atoms, and an alkynyl with 2 to 5 carbon atoms.

In some embodiments, R₁ₐ is selected from any one of -OR₂ₐ, a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, and an alkynyl with 2 to 5 carbon atoms.

In some embodiments, R₁ₐ is selected from any one of -OR₂ₐ, a chain alkyl with 1 to 3 carbon atoms, a halogen-substituted chain alkyl with 1 to 3 carbon atoms, a hydroxyl-substituted chain alkyl with 1 to 3 carbon atoms, a chain alkenyl with 2 to 5 carbon atoms, and an alkynyl with 2 to 5 carbon atoms.

In some embodiments, R₂ₐ is selected from any one of H, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, and an alkyl carboxylic acid with 2 to 10 carbon atoms.

It can be understood that "alkyl carboxylic acid" refers to a group formed by substituting at least one hydrogen in an alkyl with a carboxylic acid group.

In some embodiments, R₂ₐ is selected from any one of H, a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, an alkynyl with 2 to 10 carbon atoms, and a chain alkyl carboxylic acid with 2 to 10 carbon atoms.

In some embodiments, R₂ₐ is selected from any one of H, an alkyl with 1 to 5 carbon atoms, a halogen-substituted alkyl with 1 to 5 carbon atoms, a hydroxyl-substituted alkyl with 1 to 5 carbon atoms, an alkenyl with 2 to 5 carbon atoms, an alkynyl with 2 to 5 carbon atoms, and an alkyl carboxylic acid with 2 to 5 carbon atoms.

In some embodiments, R₂ₐ is selected from any one of H, a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, an alkynyl with 2 to 5 carbon atoms, and a chain alkyl carboxylic acid with 2 to 5 carbon atoms.

In some embodiments, R₂ₐ is selected from any one of H, a chain alkyl with 1 to 3 carbon atoms, a halogen-substituted chain alkyl with 1 to 3 carbon atoms, a hydroxyl-substituted chain alkyl with 1 to 3 carbon atoms, a chain alkenyl with 2 to 5 carbon atoms, an alkynyl with 2 to 5 carbon atoms, and a chain alkyl carboxylic acid with 2 to 5 carbon atoms.

In some embodiments, the organophosphonate compound includes at least one of (A) to (C): 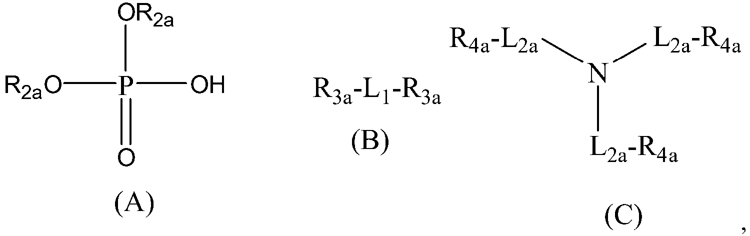 where in (a), each R₂ₐ is not simultaneously selected from H.

In some embodiments, each R₃ₐ is independently selected from any one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, a phosphonic acid group, and the group shown in formula (1-2), and at least one R₃ₐ is selected from the group shown in formula (1-2); L₁ₐ is selected from a substituted or unsubstituted alkylene with 1 to 10 carbon atoms and a substituted or unsubstituted alkenylene with 2 to 10 carbon atoms.

In some embodiments, each R₃ₐ is independently selected from any one of an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, a phosphonic acid group, and the group shown in formula (1-2), and at least one R₃ is selected from the group shown in formula (1-2).

In some embodiments, each R₃ₐ is independently selected from any one of a chain alkyl with 1 to 10 carbon atoms, a halogen-substituted chain alkyl with 1 to 10 carbon atoms, a hydroxyl-substituted chain alkyl with 1 to 10 carbon atoms, a chain alkenyl with 2 to 10 carbon atoms, an alkynyl with 2 to 10 carbon atoms, a phosphonic acid group, and the group shown in formula (1-2), and at least one R₃ is selected from the group shown in formula (1-2).

In some embodiments, each R₃ₐ is independently selected from any one of a chain alkyl with 1 to 5 carbon atoms, a halogen-substituted chain alkyl with 1 to 5 carbon atoms, a hydroxyl-substituted chain alkyl with 1 to 5 carbon atoms, a chain alkenyl with 2 to 5 carbon atoms, an alkynyl with 2 to 10 carbon atoms, a phosphonic acid group, and the group shown in formula (1-2), and at least one R₃ is selected from the group shown in formula (1-2).

In some embodiments, each L₂ₐ is independently selected from any one of a single bond, an alkylene with 1 to 10 carbon atoms, a hydroxyl-substituted alkylene with 1 to 10 carbon atoms, a halogen-substituted alkylene with 1 to 10 carbon atoms, and an alkenylene with 2 to 10 carbon atoms.

In some embodiments, each L₂ₐ is independently selected from any one of a single bond, a chain alkylene with 1 to 10 carbon atoms, a hydroxyl-substituted chain alkylene with 1 to 10 carbon atoms, a halogen-substituted chain alkylene with 1 to 10 carbon atoms, and an alkenylene with 2 to 10 carbon atoms.

In some embodiments, each L₂ₐ is independently selected from any one of a single bond, an alkylene with 1 to 5 carbon atoms, a hydroxyl-substituted alkylene with 1 to 5 carbon atoms, a halogen-substituted alkylene with 1 to 5 carbon atoms, and an alkenylene with 2 to 5 carbon atoms.

In some embodiments, each L₂ₐ is independently selected from any one of a single bond, a chain alkylene with 1 to 5 carbon atoms, a hydroxyl-substituted chain alkylene with 1 to 5 carbon atoms, a halogen-substituted chain alkylene with 1 to 5 carbon atoms, and a chain alkenylene with 2 to 5 carbon atoms.

In some embodiments, each R₄ₐ is independently selected from at least one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and -L₂₁ₐR₅ₐ.

Each L₂₁ₐ is independently selected from a single bond and a substituted or unsubstituted alkylene with 1 to 10 carbon atoms; R₅ₐ is selected from -N(R₆ₐ)₂, where each R₆ₐ is independently selected from any one of H, a substituted or unsubstituted alkylene with 1 to 10 carbon atoms, a phosphonic acid group, and the structure shown in formula (1-1); (c) contains at least one group shown in formula (1-2).

It can be understood that the presence of at least one group shown in formula (1-2) in (C) means that at least one R₄ₐ in formula (C) is selected from -L₂₁ₐR₅ₐ, at least one L₂₁ₐ is - N(R₆ₐ)₂, and at least one R₆ₐ is the group shown in formula (1-2).

In some embodiments, each L₂₁ₐ is independently selected from any one of a single bond, an alkylene with 1 to 10 carbon atoms, a halogen-substituted alkylene with 1 to 10 carbon atoms, and a hydroxyl-substituted alkylene with 1 to 10 carbon atoms.

In some embodiments, each L₂₁ₐ is independently selected from any one of a single bond, a chain alkylene with 1 to 10 carbon atoms, a halogen-substituted chain alkylene with 1 to 10 carbon atoms, and a hydroxyl-substituted chain alkylene with 1 to 10 carbon atoms.

In some embodiments, each L₂₁ₐ is independently selected from any one of a single bond, an alkylene with 1 to 5 carbon atoms, a halogen-substituted alkylene with 1 to 5 carbon atoms, and a hydroxyl-substituted alkylene with 1 to 5 carbon atoms.

In some embodiments, each L₂₁ₐ is independently selected from any one of a single bond, a chain alkylene with 1 to 5 carbon atoms, a halogen-substituted chain alkylene with 1 to 5 carbon atoms, and a hydroxyl-substituted chain alkylene with 1 to 5 carbon atoms.

In some embodiments, each L₂₁ₐ is independently selected from any one of a single bond, an alkylene with 1 to 3 carbon atoms, a halogen-substituted alkylene with 1 to 3 carbon atoms, and a hydroxyl-substituted alkylene with 1 to 3 carbon atoms.

In some embodiments, each R₆ₐ is independently selected from any one of H, an alkylene with 1 to 10 carbon atoms, a halogen-substituted alkylene with 1 to 10 carbon atoms, a hydroxyl-substituted alkylene with 1 to 10 carbon atoms, a phosphonic acid group, and the structure shown in formula (1-2).

In some embodiments, each R₆ₐ is independently selected from any one of H, a chain alkylene with 1 to 10 carbon atoms, a halogen-substituted chain alkylene with 1 to 10 carbon atoms, a hydroxyl-substituted chain alkylene with 1 to 10 carbon atoms, a phosphonic acid group, and the structure shown in formula (1-2).

In some embodiments, each R₆ₐ is independently selected from any one of H, an alkylene with 1 to 5 carbon atoms, a halogen-substituted alkylene with 1 to 5 carbon atoms, a hydroxyl-substituted alkylene with 1 to 5 carbon atoms, a phosphonic acid group, and the structure shown in formula (1-2).

In some embodiments, each R₆ₐ is independently selected from any one of H, a chain alkylene with 1 to 5 carbon atoms, a halogen-substituted chain alkylene with 1 to 5 carbon atoms, a hydroxyl-substituted chain alkylene with 1 to 5 carbon atoms, a phosphonic acid group, and the structure shown in formula (1-2).

In some embodiments, the lithium organophosphonate compound includes at least one of hydroxyethane diphosphonic acid, amino trimethylene phosphonic acid, ethylenediamine tetramethylene phosphonic acid, hexamethylene diaminetetramethylene phosphonic acid, and diethylenetriamine pentamethylene phosphonic acid.

One embodiment of the present application further provides a positive electrode plate, which includes the composite positive electrode material described above or the composite positive electrode material obtained by the preparation method for a composite positive electrode material described above.

When the above positive electrode plate is used to prepare a battery, the cycling stability and dynamics performance of the battery can be enhanced.

Specifically, the positive electrode plate includes a current collector and a positive electrode active layer disposed on the surface of the current collector. The components of the positive electrode active layer include the composite positive electrode material described above or the composite positive electrode material obtained by the preparation method for a composite positive electrode material described above.

In any embodiment of the present application, in the positive electrode active layer, the mass percentage of the composite positive electrode material is 70% to 100%.

In any embodiment of the present application, the components of the positive electrode active layer further include a conductive agent and a binder.

The conductive agent may be any conductive agent commonly used in the art, including but not limited to at least one of graphite, carbon nanotubes, nanofibers, carbon black, and graphene. Specifically, the conductive agent may be selected from at least one of SP, KS-6, acetylene black, branched Ketjen black ECP, SFG-6, vapor-grown carbon fibers (VGCF), carbon nanotubes (CNTs), graphene, and composite conductive agents thereof.

The binder may be at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile-butadiene rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorinated acrylate resin.

Optionally, in the positive electrode active layer, the mass percentage of the conductive agent is 1% to 20%.

Optionally, in the positive electrode active layer, the mass percentage of the binder is 1% to 10%.

In any embodiment of the present application, the current collector may be a metal foil or a composite current collector. For example, as the metal foil, an aluminum foil may be used. The composite current collector may include a polymer material substrate and a metal layer formed on at least one surface of the polymer material substrate. The composite current collector may be fabricated by forming a metal material on a polymer material substrate.

In some embodiments, the metal material is selected from any one of aluminum, an aluminum alloy, nickel, a nickel alloy, titanium, a titanium alloy, silver, and a silver alloy.

In some embodiments, the polymer material substrate includes at least one of polypropylene (PP), polyethylene terephthalate (PET), polybutylene terephthalate (PBT), polystyrene (PS), and polyethylene (PE).

In any embodiment of the present application, the positive electrode plate can be specifically prepared in the following manner: dispersing the components described above for preparing the positive electrode plate in a solvent to form a positive electrode active slurry; and coating a current collector with the positive electrode active slurry, and performing drying, cold pressing, and other processes, such that the positive electrode plate can be obtained. The solid content of the positive electrode slurry is 40 wt% to 80 wt%, and the viscosity at room temperature is adjusted to 5000 mPa·s to 25000 mPa·s. After drying, the slurry is cold-pressed using a cold rolling mill to form the positive electrode plate.

In some embodiments, the solvent includes N-methylpyrrolidone.

In some embodiments, the areal density of the composite positive electrode material contained in the positive electrode plate is 0.018 g/cm² to 0.05 g/cm².

The areal density of the composite positive electrode material = mass of the composite positive electrode material/area of the positive electrode plate.

Another embodiment of the present application provides a secondary battery, which includes the above composite positive electrode material, or the composite positive electrode material obtained by the above preparation method for a composite positive electrode material, or the above positive electrode plate.

In some embodiments, the above secondary battery further includes a negative electrode plate, a separator, and an electrolytic solution. The negative electrode plate, the separator, and the electrolytic solution are introduced herein in a non-limiting manner.

### [Negative Electrode Plate]

The negative electrode plate includes a current collector and a negative electrode active layer loaded on the surface of the current collector.

The components of the negative electrode active layer include a negative electrode active material.

The above negative electrode active material may be a negative electrode active material commonly used in the present application.

In any embodiment of the present application, the above negative electrode active material includes at least one of mesocarbon microbeads, graphite, glassy carbon, carbon nanotubes, carbon-carbon composite materials, carbon fibers, hard carbon, soft carbon, silicon-based materials, tin-based materials, magnesium-based materials, and iron-based materials.

Optionally, specific examples of the above negative electrode active material include, but are not limited to: at least one of mesocarbon microbeads, natural graphite, artificial graphite, graphene, glassy carbon, carbon nanotubes, carbon fibers, hard carbon, soft carbon, iron oxide, tin oxide, silicon oxide, magnesium oxide, and silicon-carbon composites.

In any embodiment of the present application, the above battery is a lithium battery, and the mass percentage of the above negative electrode active material in the negative electrode active layer is 70% to 100%.

In any embodiment of the present application, the components of the above negative electrode active layer further include a negative electrode conductive agent and a negative electrode binder.

In any embodiment of the present application, the above negative electrode conductive agent may be a conductive material commonly used in the art, including but not limited to at least one of graphite, carbon nanotubes, nanofibers, carbon black, and graphene. Specifically, the negative electrode conductive agent may be selected from at least one of SP, KS-6, acetylene black, branched Ketjen black ECP, SFG-6, vapor-grown carbon fibers (VGCF), carbon nanotubes (CNTs), graphene, and composite conductive agents thereof.

The weight ratio of the negative electrode conductive agent in the negative electrode active layer is 0 to 20 wt% based on the total weight of the negative electrode active layer.

The above negative electrode binder may be a binder commonly used in the art and may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

The weight ratio of the negative electrode binder in the negative electrode active layer is 0 to 30 wt% based on the total weight of the negative electrode active layer.

In any embodiment of the present application, the negative electrode active layer further optionally includes other auxiliary agents, such as a thickener (e.g., sodium carboxymethylcellulose (CMC-Na)). The weight ratio of the other auxiliary agents in the negative electrode active layer is 0 to 15 wt% based on the total weight of the negative electrode active layer.

In any embodiment of the present application, the current collector in the negative electrode plate may be a metal foil or a composite current collector. For example, as the metal foil, a copper foil may be used.

The composite current collector may include a polymer material substrate and a metal layer formed on at least one surface of the polymer material substrate. The composite current collector may be fabricated by forming a metal material on a polymer material substrate.

In some embodiments, the metal material is selected from any one of aluminum, an aluminum alloy, nickel, a nickel alloy, titanium, a titanium alloy, silver, and a silver alloy.

In some embodiments, the polymer material substrate includes at least one of polypropylene (PP), polyethylene terephthalate (PET), polybutylene terephthalate (PBT), polystyrene (PS), and polyethylene (PE).

In any embodiment of the present application, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating a negative electrode current collector with the negative electrode slurry, and performing drying, cold pressing, and other processes, such that the negative electrode plate can be obtained. The solid content of the negative electrode slurry is 30 wt% to 70 wt%, and the viscosity at room temperature is adjusted to 2000 mPa·s to 10000 mPa·s. The negative electrode current collector is coated with the obtained negative electrode slurry, followed by a drying process and cold pressing (e.g., dual roller) to obtain the negative electrode plate.

In some embodiments, the areal density of the negative electrode active material contained in the negative electrode plate is 0.005 g/cm² to 0.03 g/cm².

The areal density of the negative electrode active material = mass of the negative electrode active material/area of the negative electrode plate.

### [Electrolytic Solution]

The electrolytic solution includes an electrolyte salt and a solvent.

In some embodiments, the electrolyte salt may be selected from a lithium-ion electrolyte salt commonly used in the art.

As an example, the lithium-ion electrolyte salt includes, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the concentration of the electrolyte salt in the electrolytic solution is generally 0.5 mol/L to 15 mol/L.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

The separator is disposed between the positive electrode plate and the negative electrode plate.

The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

The thickness of the separator is controlled to be 2 µm to 15 µm; optionally, the thickness of the separator is controlled to be 2 µm to 13 µm.

In some embodiments, the battery described above is a secondary battery; specifically, the battery is a lithium-ion battery.

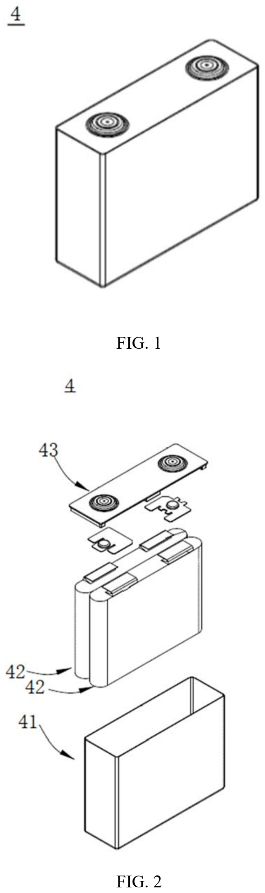

The shape of the secondary battery is not particularly limited in the present application and may be cylindrical, prismatic, or any other shape. For example, FIG. 1 shows a battery cell 4 having a prismatic structure as one example.

In some embodiments, referring to FIG. 2, the shell may include a housing 41 and a cover plate 43. The housing 41 may include a bottom plate and a side plate connected to the bottom plate, and the bottom plate and the side plate define, in an enclosing manner, an accommodating cavity. The housing 41 is provided with an opening in communication with the accommodating cavity, and the cover plate 43 is capable of lidding the opening to close the accommodating cavity.

The positive electrode plate, the negative electrode plate, and the separator may be subject to a winding process or a stacking process to form an electrode assembly 42. The electrode assembly 42 is packaged in the accommodating cavity. The electrolytic solution is infiltrated into the electrode assembly 42. The number of electrode assemblies 42 included in the battery cell 4 may be one or more and may be adjusted as needed.

The above secondary battery includes one or more battery cells 4.

The secondary battery may be a battery module or a battery pack. The battery module or the battery pack includes at least one battery cell. The number of battery cells 4 included in the battery module may be one or more, and those skilled in the art may select an appropriate number according to the application and capacity of the battery module.

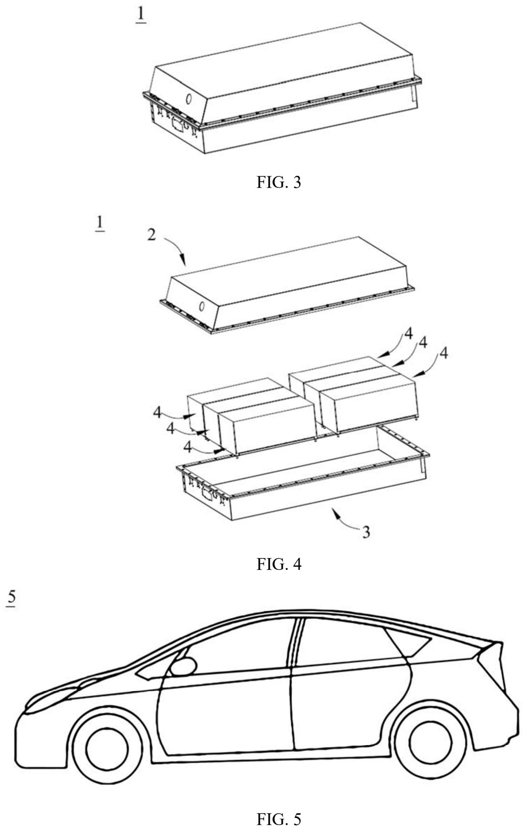

FIG. 3 and FIG. 4 show a battery pack 1 as one example. The battery pack 1 includes a battery case and one or a plurality of battery cells 4 disposed in the battery case. The battery case includes an upper case body 2 and a lower case body 3. The upper case body 2 is capable of lidding the lower case body 3 to form a closed space for the battery cells 4.

The plurality of battery cells 4 may be disposed in any manner in the battery case.

The present application further provides an electric device, which includes the above secondary battery.

Further, in the electric device described above, the battery may be in the form of a battery cell, or may be in the form of a battery pack assembled further.

The secondary battery pack may be used as a power source for the electric device, or as an energy storage unit for the electric device.

The electric device described above may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 5 shows an electric device 5 as one example. The electric device 5 is a pure electric vehicle, a hybrid electric vehicle, a plug-in hybrid electric vehicle, or the like. To meet the requirements of the electric device 5 for high power and high energy density of the battery, the battery pack may be used.

As another example, the electric device may be a mobile phone, a tablet computer, a notebook computer, or the like. The device is generally required to be light and thin, and a battery can thus be used as a power source.

The present application is described below with reference to specific examples. However, the present application is not limited to the following examples. It is to be understood that the appended claims encompass the scope of the present application, and under the guidance of the concept of the present application, those skilled in the art should recognize that certain changes of the examples of the present application shall fall within the spirit and scope of the present application.

The specific examples are as follows.

### Example 1

### (1) Preparation of positive electrode plate

In S1, an elemental M (sulfur) additive was added into an organic solvent N-methylpyrrolidone (NMP), and

stirred at a speed of 400 r/s to 1000 r/s for 0.5 h to dissolve, thereby preparing an elemental M solution with a concentration of 1 mol/L.

In S2, an organophosphorus compound hydroxyethane diphosphonic acid was added into an organic solvent ethanol and stirred at a speed of 400 r/s to 1000 r/s for 0.5 h to dissolve, thereby preparing an organophosphorus solution with a concentration of 0.5 mol/L.

In S3, a nickel-containing positive electrode material LiNi_{0.9}Co_{0.7}Mn_{0.3}O₂ (NCM9-based material), a binder polyvinylidene difluoride (PVDF), and a conductive agent SP were prepared at a mass ratio of 97:1:2 and mixed with a solvent N-methylpyrrolidone (NMP) to obtain a prefabricated cathode slurry with a solid content of 75%.

In S3, the elemental M solution was added into the prefabricated cathode slurry and stirred for 1 h; after uniform mixing, the organophosphorus solution was added and stirred for 0.5 h to obtain a uniformly mixed cathode composite slurry.

The mass ratio of elemental M to the nickel-containing positive electrode material is denoted as X1, and the mass ratio of the organophosphorus compound to the nickel-containing positive electrode material is denoted as X2.

In S4, a current collector aluminum foil was coated with the cathode composite slurry and dried at 110°C for 30 min to form an active layer, thereby obtaining a prefabricated positive electrode plate.

The compaction density of the prefabricated positive electrode plate is 3.5 g/cm³, and the compaction density is calculated as the following formula:

Compaction density = areal density/(thickness of electrode plate - thickness of current collector).

The above compaction density and areal density have meanings well known in the art. The areal density of the electrode plate refers to the weight of the active layer loaded on a unit area of the electrode plate, where density per unit area = weight of the active layer/area of the active layer. As an example, the compaction density may be tested by the following steps:

cutting the positive electrode plate into films with a length of 1000 mm; and compressing the negative electrode plate under a certain pressure, followed by punching into small discs of 1540.25 mm², and measuring the weight and thickness of the small discs, from which the compaction density can be calculated.

### (2) Preparation of negative electrode

A silicon oxide material SiOx, artificial graphite, a conductive agent carbon black, a binder styrene-butadiene rubber (SBR), and a thickener sodium hydroxymethylcellulose (CMC) were added to deionized water in a weight ratio of 40:57:0.5:1.25:1.25, and mixed and stirred for 6 h to obtain a negative electrode slurry, and the negative electrode slurry was evenly applied on a negative electrode current collector, followed by drying to obtain a negative electrode plate.

The compaction density of the negative electrode plate is 1.6 g/cm³, and the test method refers to the above test of the compaction density of the positive electrode plate.

### (3) Preparation of electrolytic solution

Ethylene carbonate (EC), ethyl methyl carbonate (EMC), and diethyl carbonate (DEC) were mixed in a volume ratio of EC:EMC:DEC = 1:1:1 to obtain an organic solvent. Then, a fully dried lithium salt (LiPF₆) was dissolved in the above organic solvent to prepare an electrolytic solution with a concentration of 1 mol/L.

(4) Separator: A polyethylene film was selected as the separator of the lithium-ion battery.

(5) Assembly of lithium-ion battery: The above to-be-assembled positive electrode plate, separator, and negative electrode plate were stacked sequentially, with the separator positioned between the positive electrode plate and the negative electrode plate to play an isolating role; the stack was then wound to obtain a bare cell. The bare cell was placed in a battery housing, dried, and then injected with the electrolytic solution. After undergoing processes such as vacuum packaging, standing, formation, and shaping, a to-be-tested lithium-ion battery was obtained. The formation process was as follows: Constant current charging was performed at a current of 0.05 C until the cell voltage reached a cutoff voltage of 3.7 V.

During the formation process, the nickel-containing positive electrode material in the prefabricated positive electrode plate reacted with elemental M and the organophosphorus compound, and a functional film layer was formed on the surface of the nickel-containing positive electrode material, thus obtaining a composite positive electrode material.

### (6) Test:

In S1, a positive electrode plate was disassembled from the lithium-ion battery, and the components of the active layer were subject to a separation treatment by the following method to acquire the nickel-containing positive electrode material, i.e., the composite positive electrode material.

The positive electrode plate was soaked in DMC for 30 min to remove the electrolyte solvent and lithium salt, followed by scraping powder to separate the positive electrode active layer powder from the aluminum current collector. The collected powder was dissolved in NMP and stirred for 30 min to obtain a mixed slurry. The mixed slurry was then centrifuged in a centrifuge for 15 min, and the lower layer component was collected, where the component was the composite positive electrode material.

The obtained composite positive electrode material was observed under a transmission electron microscope (TEM). Distinct layering could be seen, including the nickel-containing positive electrode material and the functional film layer disposed on the surface of the nickel-containing positive electrode material. The thickness of the functional film layer could be obtained according to the information of a transmission electron microscope image and was denoted as H.

Specifically, when acquiring the thickness of the functional film layer, five regions were marked on the composite positive electrode material to test the thickness, and the average value was calculated.

In S2, the components of the functional film layer of the composite positive electrode material were subject to a qualitative test using XPS to confirm the types of the main components.

The XPS test results show that the functional film layer contains a characteristic peak of the MO₄²⁻ group (175 Ev, when M is S) in Li₂MO₄ and a characteristic peak of the phosphate LiPO₂²⁻ (55.8 eV). The molar ratio of the MO₄²⁻ group in Li₂MO₄ to the phosphate in the lithium organophosphonate compound was calculated according to the intensity ratio of the characteristic peaks, denoted as Y₁.

In S3, the residual lithium content Y₂ of the composite positive electrode material was determined using an acid-base titration method, and the residual lithium includes Li₂CO₃, LiOH, and Li₂O. The specific steps were as follows:

Pre-treatment: 30 g of composite positive electrode material powder was weighed, 100 mL of pure water was added, and the mixture was stirred for 30 min; after standing for 10 min, suction filtration was performed, and a certain amount of filtrate was removed.

Test: The filtrate was titrated using a 0.05 mol/L hydrochloric acid standard solution, and the residual lithium content Y₂ was calculated according to the titration result. The testing and analytical method referred to GB/T 9736-2008.

In S4, the residual content Y₃ of elemental M in the composite positive electrode material was characterized and tested through differential scanning calorimetry (DSC) and thermogravimetric analysis.

### S5: Battery rate cycle test

### (1) 0.33 C cycle capacity retention rate test

At 25 °C, the secondary ion battery was first charged to 4.25 V at a constant current of 0.33 C, and then further charged to a current of 0.05 C at a constant voltage of 4.25 V. After standing for 30 min, the lithium-ion battery was discharged to 2.8 V at a constant current of 0.33 C. This is one charge-discharge cycle, and the discharge capacity of this cycle is considered the discharge capacity for the first cycle, denoted as Cap4.

The secondary battery was subject to a charge-discharge cycle test according to the above manner. The discharge capacity at the 100th cycle was taken and denoted as Cap5, and the capacity retention rate of the lithium-ion battery after 100 cycles was calculated as M3 = [Cap5/Cap4] × 100%. A higher M3 value indicates a smaller capacity loss of the battery and better rate cycle performance.

### (2) Cycle capacity retention rate test at 1 C

At 25 °C, the lithium-ion battery was first charged to 4.25 V at a constant current of 1 C, and then further charged to a current of 0.05 C at a constant voltage of 4.25 V. After standing for 30 min, the lithium-ion battery was discharged to 2.8 V at a constant current of 1 C. This is one charge-discharge cycle, and the discharge capacity of this cycle is considered the discharge capacity for the first cycle, denoted as Cap6. The lithium-ion battery was subject to a charge-discharge cycle test according to the above manner. The discharge capacity at the 100th cycle was taken and denoted as Cap7, and the capacity retention rate (%) of the lithium-ion battery after 100 cycles was calculated as M4 = [Cap7/Cap6] × 100%.

A higher M4 value indicates a smaller capacity loss of the battery and better rate cycle performance.

### S8: Battery impedance test

At 25 °C, the prepared secondary battery was charged to 4.25 V at a constant current of 1/3C, then charged to 0.05 C at a constant voltage of 4.25 V; after standing for 30 min, the voltage U1 was recorded, followed by discharging at 1/3C for 30 s, and the voltage U2 was recorded. The internal resistance DCR of the secondary battery before storage was calculated based on the formula DCR = (U2 - U1)/1/3C.

The specific parameters and test results are shown in Table 1.

### Examples 2 to 5

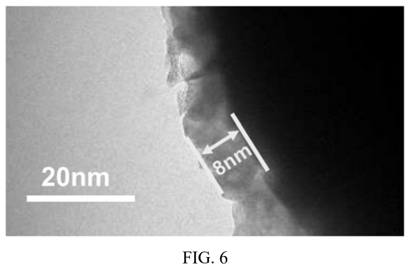

Examples 2 to 5 were substantially the same as Example 1, except that in the preparation of the positive electrode plate in step (1), the type and amount of the organophosphorus compound used were different from those in Example 1, and the details are shown in Table 1. Specifically, an electron microscope image of the composite positive electrode material obtained in Example 4 is shown in FIG. 6.

The other steps and conditions were the same as those in Example 1.

Examples 6 to 7

Examples 6 to 7 were substantially the same as Example 1, except that in the preparation of the positive electrode plate in step (1), the type and amount of elemental M used were different from those in Example 1, and the details are shown in Table 1.

The other steps and conditions were the same as those in Example 1.

### Examples 8 to 15

Examples 8 to 15 were substantially the same as Example 1, except that in the preparation of the positive electrode plate in step (1), the amounts of elemental M and the organophosphorus compound were controlled to be different from those in Example 1, and the details are shown in Table 1.

The other steps and conditions were the same as those in Example 1.

### Comparative Example 1

Comparative Example 1 was substantially the same as Example 1, except that in the preparation of the positive electrode plate in step (1), no elemental M was added, and the details are shown in Table 1.

The other steps and conditions were the same as those in Example 1.

### Comparative Example 2

Comparative Example 2 was substantially the same as Example 1, except that in the preparation of the positive electrode plate in step (1), no organophosphorus compound was added, and the details are shown in Table 1.

The other steps and conditions were the same as those in Example 1.

The process conditions and test results of each example and comparative example are shown in Table 1. In the table, the mass ratio of elemental M to the nickel-containing positive electrode material is denoted as X₁, the mass ratio of the organophosphorus compound to the nickel-containing positive electrode material is denoted as X₂, the molar ratio of Li₂MO₄ to the lithium organophosphonate compound is denoted as Y₁, the residual lithium content of the composite positive electrode material is denoted as Y₂, the residual content of elemental S in the composite positive electrode material is denoted as Y₃, and the thickness of the functional film layer in the composite positive electrode material is denoted as H.

**Table 1**

| | Composite positive electrode material | | | | | | | | Secondary battery | | |
|---|---|---|---|---|---|---|---|---|---|---|---|
| | Elemental M | X₁ | Organophosphorus compound | X₂ | Y₁ | Y₂ (%) | Y₃ (%) | H (nm) | M3 (%) | M4 (%) | DCR (mΩ) |
| Example 1 | Sulfur | 0.17:100 | Hydroxyethane diphosphonic acid | 0.1:100 | 2:1 | 0.15% | <0.01% | 5 | 97.94% | 92.33% | 2.25 |
| Example 2 | Sulfur | 0.17:100 | Amino trimethylene phosphonic acid | 0.25:100 | 2:1 | 0.171% | <0.01% | 7 | 97.48% | 91.89% | 2.31 |
| Example 3 | Sulfur | 0.17:100 | Ethylenediamine tetramethylene phosphonic acid | 0.27:100 | 2:1 | 0.174% | <0.01% | 7 | 97.22% | 91.64% | 2.33 |
| Example 4 | Sulfur | 0.17:100 | Hexamethylene diaminetetrameth ylene phosphonic acid | 0.31:100 | 2:1 | 0.180% | <0.01% | 8 | 96.65% | 91.10% | 2.36 |
| Example 5 | Sulfur | 0.17:100 | Diethylenetriamin e pentamethylene phosphonic acid | 0.28:100 | 2:1 | 0.142% | <0.01% | 7 | 96.27% | 90.76% | 2.42 |
| Example 6 | Selenium | 0.2:100 | Hydroxyethane diphosphonic acid | 0.1:100 | 1:1 | 0.153% | <0.01% | 6 | 97.82% | 92.23% | 2.27 |
| Example 7 | Tellurium | 0.3:100 | Hydroxyethane diphosphonic acid | 0.1:100 | 1:1 | 0.155% | <0.01% | 6 | 97.60% | 92.00% | 2.28 |
| Example 8 | Sulfur | 0.05:100 | Hydroxyethane diphosphonic acid | 0.06:100 | 1:1 | 0.33% | <0.01% | 3 | 94.72% | 89.27% | 2.57 |
| Example 9 | Sulfur | 0.08:100 | Hydroxyethane diphosphonic acid | 0.1:100 | 1:1 | 0.26% | <0.01% | 6 | 96.00% | 90.52% | 2.45 |
| Example 10 | Sulfur | 0.3:100 | Hydroxyethane diphosphonic acid | 0.38:100 | 1:1 | 0.167% | 0.020% | 10 | 95.75% | 90.26% | 2.48 |
| Example 11 | Sulfur | 0.8:100 | Hydroxyethane diphosphonic acid | 0.98:100 | 1:1 | 0.215% | 0.080% | 18 | 94.12% | 88.73% | 2.6 |
| Example 12 | Sulfur | 1:100 | Hydroxyethane diphosphonic acid | 0.2:100 | 5:1 | 0.323% | 0.050% | 10 | 95.11% | 89.66% | 2.55 |
| Example 13 | Sulfur | 0.4:100 | Hydroxyethane diphosphonic acid | 0.2:100 | 2.5:1 | 0.156% | 0.040% | 9 | 95.33% | 89.87% | 2.5 |
| Example 14 | Sulfur | 0.3:100 | Hydroxyethane diphosphonic acid | 0.2:100 | 1.8:1 | 0.155% | <0.01% | 8 | 96.43% | 90.91% | 2.4 |
| Example 15 | Sulfur | 0.1:100 | Hydroxyethane diphosphonic acid | 0.2:100 | 0.6:1 | 0.410% | <0.01% | 6 | 95.25% | 89.79% | 2.52 |
| Comparative Example 1 | / | / | Hydroxyethane diphosphonic acid | 0.2:100 | / | 1.212% | 0.16% | 4 | 90.35% | 85.16% | 3.42 |
| Comparative Example 2 | Sulfur | 0.17:100 | / | / | / | 0.883% | 0.14% | 4 | 93.15% | 87.82% | 2.68 |

| | | | | | | | | | | | |
|---|---|---|---|---|---|---|---|---|---|---|---|
| Note: "/" indicates that the substance or parameter is not present. "Y3 < 0.01%" indicates that the content of residual lithium is extremely low and has fallen below the lower limit that can be accurately determined by the acid-base titration method. | | | | | | | | | | | |

By analyzing the data in Table 1, a comparison of the test results of Examples 1 to 15 and Comparative Examples 1 to 2 shows that the composite positive electrode material of the present application is used to form a functional film layer with specific components on the surface of a positive electrode material substrate. The synergy of the inorganic component Li₂MO₄ and the organic component lithium organophosphonate compound can enhance the cycling stability of the battery and reduce the internal resistance of the battery, i.e., promoting the transport and diffusion of ions or electrons between two electrodes in the battery and reducing the energy consumed during charging and discharging of the battery, thereby enhancing the dynamics performance of the battery.

Therefore, it can be seen that the technical solutions of the present application can enhance the cycle service life of the battery while maintaining relatively good dynamics performance.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The aforementioned examples merely illustrate several embodiments of the present application, which are described in a specific and detailed manner, but should not be construed as limiting the scope of the present application. It should be noted that various changes and modifications can be made by those skilled in the art without departing from the concept of the present application, and these changes and modifications all shall fall within the protection scope of the present application. Therefore, the protection scope of the patent in the present application shall be subject to the appended claims, and the description and drawings can be used to explain the contents of the claims.

## Claims

1. A composite positive electrode material, comprising a nickel-containing positive electrode material and a functional film layer disposed on a surface of the nickel-containing positive electrode material, wherein components of the functional film layer comprise Li₂MO₄ and a lithium organophosphonate compound,
wherein M is selected from at least one of sulfur, selenium, and tellurium; and the lithium organophosphonate compound has a structure shown in formula (1): 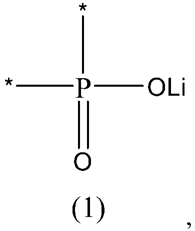 wherein * represents sites where the structure shown in formula (1) is connected to other structures in the lithium organophosphonate compound.

2. The composite positive electrode material according to claim 1, wherein in the functional film layer, a molar ratio of a MO₄²⁻ group in Li₂MO₄ to the structure shown in formula (1) of the lithium organophosphonate compound is (0.6 to 5):1; and
optionally, in the functional film layer, the molar ratio of the MO₄²⁻ group in Li₂MO₄ to the structure shown in formula (1) of the lithium organophosphonate compound is (1 to 5):1.

3. The composite positive electrode material according to claim 1, wherein a content of elemental M in the composite positive electrode material is ≤ 0.1%.

4. The composite positive electrode material according to any one of claims 1 to 3, wherein the functional film layer has a thickness of 5 nm to 20 nm; and
optionally, the functional film layer has a thickness of 5 nm to 10 nm.

5. The composite positive electrode material according to any one of claims 1 to 4, wherein the lithium organophosphonate compound contains a group shown in formula (1-1): 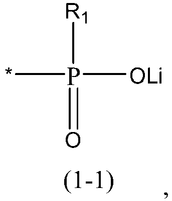 wherein R₁ is selected from any one of -OR₂, a substituted or unsubstituted alkyl with 1 to 10 carbon atoms, a substituted or unsubstituted alkenyl with 2 to 10 carbon atoms, and a substituted or unsubstituted alkynyl with 2 to 10 carbon atoms; and R₂ is selected from any one of H, Li, a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and a substituted or unsubstituted alkyl carboxylic acid with 2 to 10 carbon atoms.

6. The composite positive electrode material according to claim 5, wherein the lithium organophosphonate compound comprises at least one of (a) to (c): 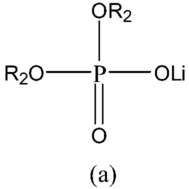
R₃-L₁-R₃ (b) 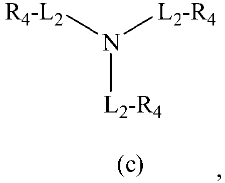
wherein in (a), each R₂ is not simultaneously selected from H;
each R₃ is independently selected from any one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, a phosphonic acid group, and the group shown in formula (1-1), and at least one R₃ is selected from the group shown in formula (1-1); and L₁ is selected from a substituted or unsubstituted alkylene with 1 to 10 carbon atoms and a substituted or unsubstituted alkenylene with 2 to 10 carbon atoms;
each L₂ is independently selected from any one of a single bond, a substituted or unsubstituted alkylene with 1 to 10 carbon atoms, and a substituted or unsubstituted alkenylene with 2 to 10 carbon atoms; and each R₄ is independently selected from at least one of a substituted or unsubstituted alkyl with 1 to 10 carbon atoms, a substituted or unsubstituted alkenyl with 2 to 10 carbon atoms, a substituted or unsubstituted alkynyl with 2 to 10 carbon atoms, and -L₂₁R₅; and
each L₂₁ is independently selected from a single bond and a substituted or unsubstituted alkylene with 1 to 10 carbon atoms; R₅ is selected from -N(R₆)₂, wherein each R₆ is independently selected from any one of H, a substituted or unsubstituted alkylene with 1 to 10 carbon atoms, a phosphonic acid group, and the structure shown in formula (1-1); and (c) contains at least one group shown in formula (1-1).

7. The composite positive electrode material according to claim 6, wherein the lithium organophosphonate compound satisfies at least one of the following conditions (3) to (5):
(3) each R₂ is independently selected from any one of H, Li, an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, an alkyl carboxylic acid with 2 to 10 carbon atoms, and a hydroxyl-substituted alkyl carboxylic acid with 2 to 10 carbon atoms;
(4) each R₃ is independently selected from any one of an alkyl with 1 to 10 carbon atoms, a halogen-substituted alkyl with 1 to 10 carbon atoms, a hydroxyl-substituted alkyl with 1 to 10 carbon atoms, an alkenyl with 2 to 10 carbon atoms, an alkynyl with 2 to 10 carbon atoms, a phosphonic acid group, and the group shown in formula (1-1); and
(5) each R₄ is independently selected from at least one of an alkyl with 1 to 10 carbon atoms, an alkenyl with 2 to 10 carbon atoms, an alkynyl with 2 to 10 carbon atoms, and -L₂₁R₅; and each R₆ is independently selected from any one of an alkylene with 1 to 10 carbon atoms, a phosphonic acid group, and the group shown in formula (1-1).

8. The composite positive electrode material according to any one of claims 1 to 7, wherein the components of the functional film layer further comprise a metal oxide-type rock salt phase; and
optionally, a metal in the metal oxide-type rock salt phase comprises at least one of Ni, Co, and Mn.

9. The composite positive electrode material according to any one of claims 1 to 8, wherein components of the nickel-containing positive electrode material satisfy:
LiₜNiₓCo_{y}AₕO_{z};
and
wherein A is selected from at least one of manganese, aluminum, copper, zinc, tin, magnesium, and iron, 0 < x < 1, 0 < y < 1, 1.5 ≤ y ≤ 2.5, 0 < h < 1, 0.8 ≤ t ≤ 1.5, and 1.5 ≤ z ≤ 2.5.

10. The composite positive electrode material according to any one of claims 1 to 9, wherein a mass percentage of residual lithium in the composite positive electrode material is ≤ 2%, and the residual lithium comprises Li₂CO₃, LiOH, and Li₂O.

11. A preparation method for a composite positive electrode material, comprising the following steps:
subjecting a nickel-containing positive electrode material, elemental M, and an organophosphonate compound to a mixing treatment to prepare a prefabricated positive electrode material; and
subjecting the prefabricated positive electrode material to a formation treatment to prepare the composite positive electrode material, wherein
elemental M comprises at least one of elemental sulfur, elemental selenium, and elemental tellurium; and the organophosphonate compound has a structure shown in formula (2): 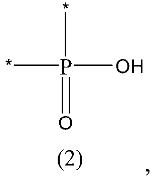 wherein * represents sites where the structure shown in formula (2) is connected to other structures in the organophosphonate compound.

12. The preparation method for a composite positive electrode material according to claim 11, wherein the mixing treatment comprises the following steps:
subjecting the nickel-containing positive electrode material and elemental M to a first mixing treatment, and then adding the organophosphonate compound for a second mixing treatment,
optionally, the first mixing treatment being performed for 0.5 h to 6 h; and
optionally, the second mixing treatment being performed for 0.5 h to 3 h.

13. The preparation method for a composite positive electrode material according to any one of claims 11 and 12, wherein the mixing treatment satisfies at least one of the following conditions (6) to (7):
(6) a mass ratio of elemental M to the nickel-containing positive electrode material is (0.01 to 1):100,
optionally, the mass ratio of elemental M to the nickel-containing positive electrode material being (0.1 to 0.4):100; and
(7), a mass ratio of the organophosphonate compound to the nickel-containing positive electrode material is (0.01 to 1):100,
optionally, the mass ratio of the organophosphonate compound to the nickel-containing positive electrode material being (0.1 to 0.5):100.

14. A positive electrode plate, wherein the positive electrode plate comprises the composite positive electrode material according to any one of claims 1 to 10 or the composite positive electrode material obtained by the preparation method for a composite positive electrode material according to any one of claims 11 to 13.

15. A secondary battery, wherein the secondary battery comprises the composite positive electrode material according to any one of claims 1 to 10, or the composite positive electrode material obtained by the preparation method for a composite positive electrode material according to any one of claims 11 to 13, or the positive electrode plate according to claim 14.

16. An electric device, wherein the electric device comprises the secondary battery according to claim 15.
